# EUROPEAN PATENT SPECIFICATION

(11) **EP 1 209 660 B1**
(45) Date of publication and mention of the grant of the patent: **09.04.2008**
(21) Application number: 01124578.4
(22) Date of filing: 13.10.2001
(51) Int. Cl.: G10L 15/26, G10L 13/04, H04M 3/493

(54) **Voice navigation in web applications**
Sprachnavigation in Webanwendungen
Navigation vocale dans des applications sur internet

(30) Priority: 23.11.2000 EP 00125606
(43) Date of publication of application: 29.05.2002
(73) Proprietor: International Business Machines Corporation, Armonk, NY 10504 (US)
(72) Inventor: Günther, Carsten, Dr., 69245 Bammental (DE); Hänel, Walter, 71088 Holzgerlingen (DE); Schäck, Thomas, 77855 Achern (DE)
(74) Representative: Klein, Hans-Jörg

(56) References cited:
- WO-A-01/95087
- WO-A-99/48088
- US-A- 5 884 266
- US-A- 6 029 135
- KONDO K ET AL: "Surfin' the World Wide Web with Japanese" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 1151-1154, XP010226003 ISBN: 0-8186-7919-0

## Description

The present invention discloses a system and method for gathering information by voice input, especially a system and method for context-independent navigation in web applications or related web pages using voice input.

### Field of the Invention

The present invention relates generally to a voice-driven system and method for gathering information accessible via a network, especially Intranet or Internet.

### Description of the Related Art

Hypertext systems are rapidly gaining increasing significance in many areas of data and communications technology. The important examples that have already been realized are:

Typical hypertext help systems and hypertext documentation for software applications (for example, under graphics operating systems for personal computers), wherein the user can usually navigate within single hypertext documents that are stored as data files on a single computer, as well as the World Wide Web (WWW), a worldwide hypertext network based on the Internet that makes it possible for the user to navigate through a plurality of hypertext documents linked to one another that cite one another (i.e., reference one another) and that are generally stored on a great number of computers in the network at a great distance from one another. Hypertext documents thereby generally contain information in the form of text, digital images or audio or video data or combinations thereof.

A significant, characteristic feature of all hypertext systems is the possibility of navigation. In addition to containing the actual text of the document, a hypertext document contains special character sequences that can also be a component part of the actual text and that are usually referred to as links or hyper-links and that serve the purpose of hypertext navigation. Normally, these character sequences are specially marked, for example by being displayed in a different color or are emphasized in some other way, to distinguish the special character sequences from the ordinary text of the document. When a user of a hypertext system selects such a link, usually with a short click with the mouse or other pointing device, the hypertext system reacts to this instruction in that it displays the part of the same hypertext document associate with this character sequence (or link) or the system displays a different hypertext document. Other possible reactions to the selection of the link are opening up a connection to a different computer, for example to an on- line data bank, starting another application program, opening another data file, initiating a data processing process or a combination of such possible reactions. In addition thereto, hypertext systems usually also execute other instructions that are not associated with the character sequences (links) in the hypertext documents such as, for example, paging through documents that are already displayed or through document parts (for example, pages of the document), storing hypertext pages in what are referred to as hot lists, retrieving or paging through pages stored in hot lists, reloading images, etc. These instructions are normally input in the way typical for graphic user interfaces, for example with the mouse or other pointed device. There are a number of possible applications of hypertext-based systems wherein the traditional way of inputting instructions or of activating links is considered to be disturbing, undesirable or even impossible. This, for example, is the case when the user is impeded, his hands are busy with managing other jobs or when the ambient conditions forbid the employment of traditional input devices. Voice recognition is available here as a simple, natural type of input that assumes less expertise on the part of the user than other input means. The integration of traditional, acoustic voice recognition systems, i.e. systems for recognizing spoken language, with hypertext systems, which are also known as "viewer" or "browser" systems, are opposed by technological difficulties. The voice recognition system, namely, must be in the position to recognize every word that can occur as a link in a hypertext document. Because practically every word in the text can also be a hyper-link, extremely large dictionaries would be required for this purpose, and these large dictionaries would reduce the processing speed and the recognition performance of this system to an unjustifiable extent. Even if the employment of extremely large dictionaries were possible, the numerous coining of new words and proper names could not be recognized, these new words being so typical of many hypertext applications, specifically, however, for hypertext networks such as the World Wide Web.

US 6029135 discloses a hypertext navigation system for voice controlled navigation wherein a dictionary is provided which includes probability models for spoken words. The dictionary and probability model, which includes phoneme sequences to be matched to the spoken words, is generated in the user's system during access to the hypertext document in the run time version. An off-line version provides a dictionary and probability model that is generated by the author, for example, of the hypertext document, is stored on the server and is forwarded to the user system when the document is accessed by the user. The dictionary and probability model correspond to the hypertext elements that are in the hypertext document which is being accessed by the user. Accordingly, the dictionary and probability model are discarded and the next dictionary and probability model obtained as the next hypertext document is accessed. Storage of recent or important dictionaries and probability models are also provided.

WO 99/48088 discloses a system and method for implementing a voice-controlled Web browser program executing on a wearable computer. A Web document is received at the wearable computer, and processed to dynamically generate a speech grammar. The speech grammar is used to recognize voice commands at the wearable computer. Alternatively, a Web document is precompiled at a server computer to generate a speech grammar, and the speech grammar is transmitted with its corresponding Web document to the wearable computer. The wearable computer provides three mechanisms for a user to navigate Web pages by the use of voice. In one mechanism, an index value corresponding to each hyperlink is appended to the hyperlink text and displayed to the user. The user may speak the index value to activate the corresponding hyperlink. In a second mechanism, the user can speak the test of the hyperlink to activate the hyperlink. In a third mechanism, the user invokes a command to display a dialog window having a list of hyperlinks and their corresponding index values. The user can speak an index value or a hyperlink to activate the hyperlink.

A disadvantage of that system is that the voice recognition is mainly restricted to the hyperlinks used in the hypertext document which is being accessed by the user. Other hyperlinks which are not visible on the hypertext document being accessed cannot be recognized. Furthermore, fill out forms cannot be handled by that prior art system.

It is therefore object of the present invention to provide a hypertext navigation system combining the advantages of point and click hypertext navigation system with prior art voice controlled hypertext navigation system by avoiding their disadvantages.

This object is solved by the features of the independent claims. Further preferred embodiments are laid down in dependent claims.

The present invention allows users to navigate in a web application or web pages using a combination of point-and-click interaction and voice-input and voice-output interaction. At each point of the dialog, the user can use the standard point-and-click interface to perform context-dependent actions or use speech input to navigate and operate in the global application context alternatively. The voice input uses a voice navigation component which builds an interface to the installed recognition and synthesis engines. The point-and-click and the voice navigation component will be loaded automatically with the initial web page of a web application. Grammars or language models for recognizing vocabulary related to that web application will be provided with the voice navigation component. The present invention combines the advantages of a context-dependent point-and-click user interface with those of a context-independent speech-input interface. It is an approach to enhance web browsers towards multi-modal interfaces.

The present invention will be described in more detail using a preferred embodiment with Figures, where
- FIG.1: illustrates the architecture in which the present invention may be used preferably
- FIG.2: illustrates a preferred embodiment of the present invention used in the architecture according to FIG.1
- FIG.3: illustrates the inventive method according to FIG.2
- FIG.4: illustrates a flow chart with the inventive steps for carrying out the present invention
- FIG 5: illustrates a preferred user interface for activating the inventive point-and-click and voice navigation component (applet) by the user.
- FIG.6: illustrates the relationship of the interfaces between the inventive voice navigation component (applet) and the voice recognition and speech synthesis component
- FIG.7: illustrates the use of the vocabularies by the inventive voice navigation component (applet)

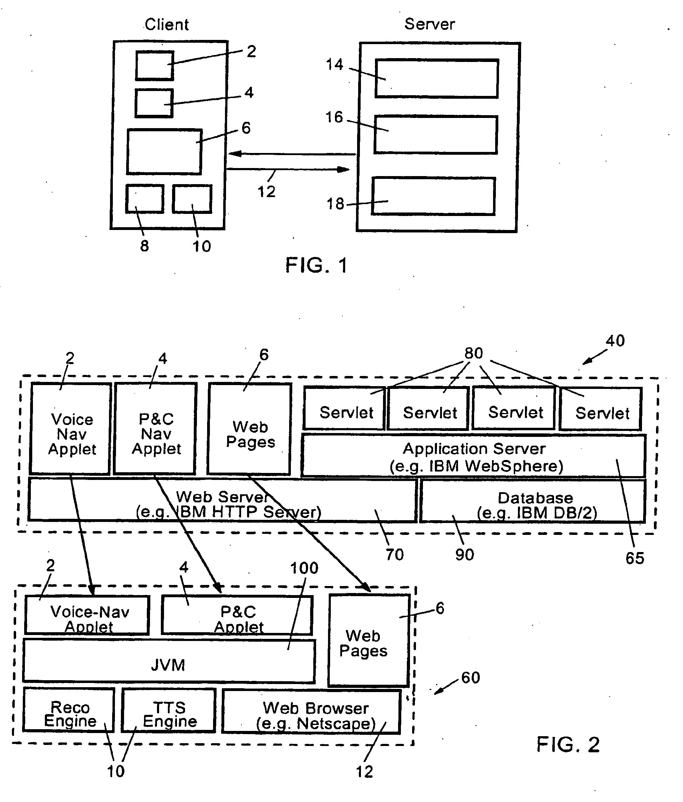

In FIG.1 the basic architecture is shown in which the present invention may be implemented preferably. The basic architecture may be a client-server architecture. On the client side following standard components are at least installed:
audio output device (e.g. loud speaker or head phones)(2) microphone (4) web browser (e.g. Netscape (6))
speech recognition and speech synthesis system (e.g. IBM Via Voice (8) and IBM Via Voice Outloud (10).

The heart of the speech recognition system is known as speech recognition engine. The speech engine recognizes speech input and translates it into text that an application understands. The application decides what to do with the recognized text. Speech-aware applications (18) access the speech engine and various speech resources through a speech recognition API (Application Programming Interface).

The speech engine may use following resources to process spoken words:
User's language of origin
Grammars

The language of origin is the language used by the speaker.

Each language can include several different grammars. A grammar is a set of vocabularies, pronunciations, and word usage models designed to support the application. The grammar is used by the speech engine to decode speech for the application. The application specifies the set of active words by activating one or more grammars.

On the server side following standard components are preferably installed:
Web Server or HTTP-Server (14)
one or more Web applications or servlets (18)
an application server or/and a data base (16)

FIG.2 illustrates the implementation of the present invention into a client-server architecture as shown in FIG.1. The speech recognition and synthesis system are available to signed Java applets.

The main component of the present invention is the voice navigation component (applet). The voice navigation component (applet) (2) performs the following major steps:
- locate, select, and initialize a speech recognition engine and speech synthesis engine
- define, enable, and disable decoding grammars
- processing of the recognition results (e.g. launch HTTP request, initiate spoken words, play back prerecorded prompts).

It is possible to use general grammars or language models that are available at the client side (60).

Usually they are installed along with the general speech recognition engine (10). Furthermore it is required to upload application-dependent or so called information-dependent grammars from the server to the client (60). These grammars specify the recognition vocabulary for navigating within related web pages or web pages belonging to a web application or related web applications. The point-and click navigation component (applet 4) presents visible and activable menu items or fillable fields. This method is user unfriendly or highly structured user interfaces to web applications (servlets- 80) because it requires a lot of clicks to step down through a menu structure or to switch into a new menu context. Therefore, it is much more user friendly to use the more general inventive voice navigation component (applet) (2). Possible input values (spoken words) to select links, menu items or to fill out forms in a visible web page or non-visible web pages can be defined via grammars. It is therefore not necessary to restrict valid input values to visible links. Additionally, it is also possible to speech-enable out of context or more general links as shortcuts to avoid time consuming menu navigation.

A further component of the present invention is the conventional point-and- click navigation component (applet 4) as used in existing prior art systems (mouse systems). The point-and-click component (applet PACNA) allows to load new web pages by pointing and clicking hyperlinks displayed in HTML documents.

Both components (2; 4) are originally stored on the server system and preferably loading of a initial web page (6) from the server (40) to the client will initiate a loading of both components automatically. As far the application dependent grammars are laid down in separate applets or files on the server (40) they may be loaded in conjunction with the initial web page (6) containing links (reference information/ URIs) to the respective application grammar. Another implementation may be that the grammars are part of the voice navigation component (applet).

The point-and-click navigation component (applet 4) and the voice navigation component (applet) (2) process the respective user input to produce an HTTP-request required to load a new web page.

The user may select between both components(2,4) alternatively by clicking the appropriate applet symbol displayed in the GUI on the client display provided by the web-application (servlet) preferably.

Further standard components on the server side may be a Web Server (e.g. IBM HTTP-Server; 70), an Application Server (e.g. IBM Websphere; 65) and a database (90). Web Server and Web browser communicates with each other and servlets(80) and applets(2,4) are stored on the server (40). The servlets will be executed on the server side and the applets will be executed on the client side.

On the client side a Java Virtual Machine (100) must be available for processing the Java-applets.

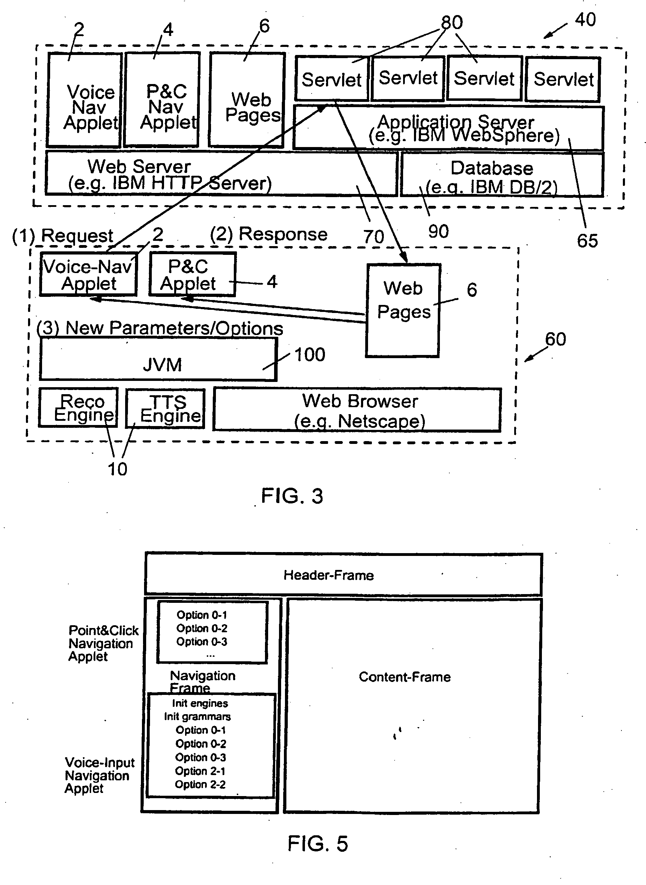

FIG.3 illustrates the basic structure of the voice navigation component (applet) according to FIG 2.

The voice navigation component (applet 2) which has been loaded from the server (40) to the client (60) uses the Client's voice recognition system(10) via the JVM (100). It connects to the installed recognition and synthesis systems, grammars or language models for the web-applications to be accessed (servlets; 80) are enabled or loaded and prompts are played. The voice navigation component (applet 2) passes audio input to the speech recognition engine(10) to decode against enabled grammars. The recognition result contains recognized words/phrases and grammar annotations. The voice navigation component (applet 2) specifies the processing of the recognition result. Relevant information of the result is extracted and is sent to the server (40), e.g. to a servlet. The server (40) may further process the request and as result returns a response with a new web page (6) for example. Possible reactions may be change the browser content, launch a http request to load new Web page, grab information from the server and to initiate a server-based transaction. The processing of the recognition result may be done either in the client (60) or in the server (40) or the processing may be distributed partly to the client (60) and the server (40). For example the semantic processing of the speech input may be distributed between client (60) and server (40). A possible implementation may be that the initial signal processing may be accomplished by a signal processing applet on the client side, the feature vector is sent via the network to the server side, and the speech recognition is made on the server side.

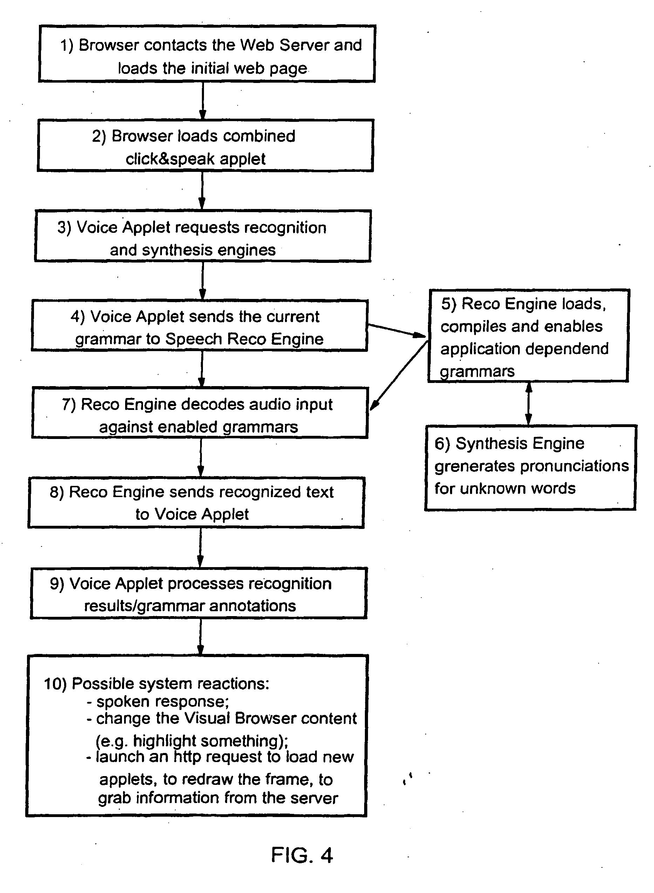

FIG.4 describes in the form of a flow chart the inventive process steps of voice-activated navigation according to the present invention.
1. Browser contacts the Web Server and loads an initial web page (2).
2. Browser loads combined point-and-click and voice navigation component (applet). The initial web page contains reference information/links (URIs-) to the point-and-click and voice navigation component (applet). The Browser evaluates the URIs and loads the respective component(applet)s (4).
3. Voice navigation component (applet) requests recognition and synthesis engines. The Java Virtual Machine processes both component(applet)s. The voice navigation component (applet) initializes the voice driven user interface. It locates, selects, and creates a speech recognition engine and a speech synthesis engine. The speech recognition engine is responsible for processing audio input to the Browser whereas the speech synthesis engine creates spoken words (6).
4. Voice component(applet) sends the current vocabularies to the speech recognition engine (8).
   The recognition of incoming speech is grammar driven. The actually valid grammar is defined in applets which will be loaded with voice navigation component (applet). The grammar will contain words/phrases matching words/phrases visible in the browser window. Furthermore, the voice navigation component (applet) may activate additional words/phrases that do not match expressions in the browser window. The present invention allows to enable words/phrases from a broader context, namely to enable word phrases for navigating within related web pages or web pages belonging to a web application or related web applications, e.g. general navigation commands, help commands, additional sub menu items and so on (information-dependent grammars). This allows direct voice driven jumps into application's sub menu and overcomes the cumbersome approach of clicking through endless menu lists and check boxes
5. Speech recognition engine loads, compiles and enables information/application-dependent grammars (10).
   The recognition engine enables the defined grammars. It is possible to enable multiple grammars for recognizing a broad scope speech. Within the grammars the actual valid recognition vocabulary is defined (10).
6. Synthesis engine generates pronunciations for unknown words (12). A speech recognition engine comes along with a basic vocabulary and attached pronunciations. But an application can contain unknown words. The recognition engine sends a request to the synthesis engine to generate missing pronunciations. These words are then added to the actual enabled words.
7. Speech recognition engine decodes audio input against enabled grammars(14). Incoming audio input is routed to the speech recognition engine. The speech recognition engine decodes against the enabled grammars.
8. Speech recognition engine sends recognized text to voice navigation component (applet) (16).
   The recognition result contains recognized words/phrases and grammar annotations. Grammar annotations represent return values of recognized grammar phrases and allow a flexible processing of recognition results. Misrecognitions (e.g. incomplete phrases, low audio input level) have to handled by the voice navigation component (applet).
9. Voice navigation component (applet) specifies the processing of the recognition result (18).
10. Possible reactions are:
   - spoken response
   - change of the browser content
   - launch a http request to load a new application/applet or web page, to redraw the content frame, to grab information from a server, to initiate a server-based transaction (20).

FIG.5 illustrates an example of user interface for the point-and- click navigation component (applet) and the voice navigation component (applet) preferably used in the present invention.

The part of user interface of the voice navigation component (applet) represents several options (6) for enabling or activating different grammars. For example option 0-3 allows to activate grammars which are restricted to recognize visible links only and option 2-2 allows to activate grammars, information dependent grammars, which opens the possibility to speech-enable out of context or more general links by avoiding time consuming navigation procedures.

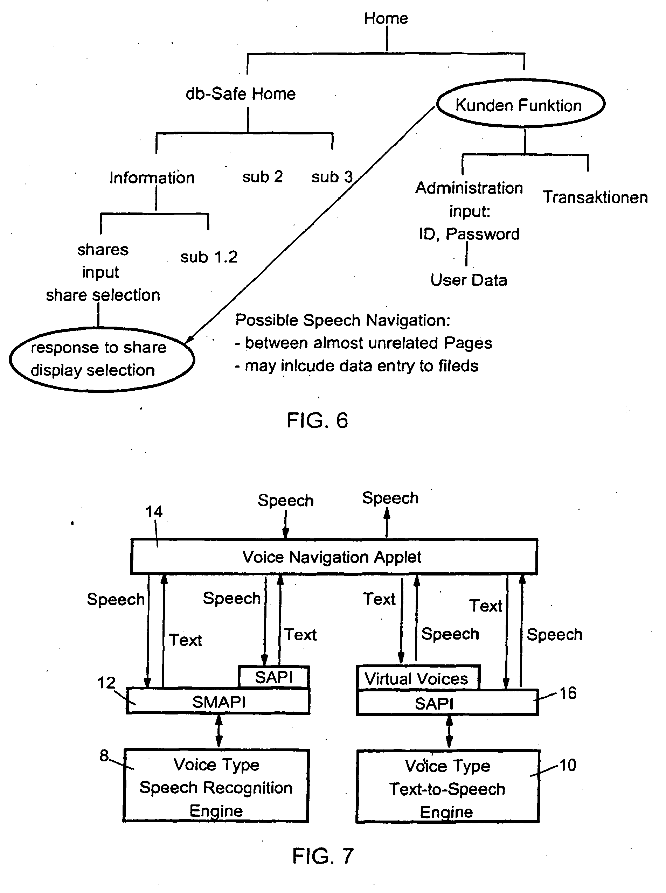

FIG.6 illustrates the advantages of the present invention with respect to a stock brokerage application for buying stocks of a certain company via Internet. Starting with the home page of the application the user has to click down from the link "customer function" to the data entry field indicated by the arrow. Then he has to input the appropriate data in the data field by typing in information. By using the present invention the user can voice-driven navigate directly from the link "customer function" to the desired data entry field and can also fillout the data entry field by voice without typing in any information.

This is realized by a grammar (applet) recognizing general navigation commands, help commands, additional sub menu items and so on contained in that brokerage application.

FIG.7 illustrates the relationship of the interfaces by a specific implementation of the present invention into IBM's Via Voice Speech Recognition Engine (8) and Text -to-Speech Engine (10).

The application programming interface to the IBM Via Voice Engine is SMAPI (12). It supports:
- verifying the API version
- Establishing a database session query system parameter
- Establishing a recognition session
- Setting up vocabularies
- Setting speech engine parameters
- Processing speech input
- Adding new words to the user vocabulary
- Handling errors
- Disconnecting from the speech engine
- Closing a speech session

The SMAPI (8) is provided as a DLL which may be linked into the voice navigation component (applet) (14).

The application programming interface to the IBM Via Voice Text-to-Speech Engine (10) is called SAPI (16). The Text-to-Speech Engine uses the following resources to translate text into synthesized speech:
- user dictionaries
- special words
- abbreviations
- roots.

The SAPI is provided as a DLL which may be linked into the voice navigation component (applet) (14).

As far as the voice navigation component (applet) is written in the program language Java an additional Java API is layered between SMAPI and SAPI (12,16) and the voice navigation component (applet) (14). The Java API may also be provided as a DLL which may be linked into the voice navigation component (applet- not shown)

More detailed information about the IBM ViaVoice programming interfaces are accessible via
http://w3.speech.ibm.com/tkdoc/ViaVoice/proguide/pgmguiO3.ht m

## Claims

1. A navigation system for a client system for gathering information provided by web applications, wherein said client system comprising:
a speech recognition engine (10) installed on said client system (60),
a browser (12) installed on said client system for establishing communication to a communication component on a server system (70) providing access to information (6) stored on said server,
a voice navigation component (2) configured to provide information - dependent grammars to said speech recognition engine (10) via said browser based on initial information loaded from said server to said client and processing the results of said speech recognition system (10),
a point-and-click navigation component for loading web pages by pointing and clicking hyperlinks displayed in HTML documents,
**characterized in that**
said voice navigation component and said point-and-click component having a common user-interface with options selectable by a user, wherein said user interface for the voice navigation component offers options for selecting information-dependent grammars stored on said server.

2. The navigation system according to claim 1, wherein said voice navigation and point-and-click component are loaded with an initial web page from said server.

3. The navigation system according to claim 1, wherein said speech recognition engine (10) further includes speech synthesis engine.

4. Method for navigation by a client system for gathering information provided by web applications, wherein said method comprises the steps of:
installing a speech recognition engine (10) on said client system (60),
establishing communication to a communication component on a server system (70) configured to access to information (6) stored on said server by a browser,
providing a voice navigation component (2)configured to provide information - dependent grammars to said speech recognition engine (10) via said browser based on initial information loaded from said server to said client and processing the results of said speech recognition system (10),
providing a point-and-click navigation component for loading web pages by pointing and clicking hyperlinks displayed in HTML documents,
**characterized in** steps of
providing an common user-interface for said voice navigation and said point-and-click component,
offering in said interface for said navigation component options for selecting information-dependent grammars stored on said server.

5. Method according to claim 4, wherein said voice navigation and point-and-click component are loaded with an initial web page from said server.

6. Method according to claim 4, wherein said information-dependent grammar defines possible input values for navigating within related web pages or web pages belonging to a web application or related web applications.

7. Method according to claim 5, wherein said initial web page contains a reference to said voice navigation component and said point-and-click component stored on said server.

8. Method according to claim 5, wherein loading of said initial web page is accompanied by the further steps:
automatically identifying reference information to information - dependent grammars in said initial web page,
automatically loading said identified information-dependent grammar to said client, and
providing access of said speech recognition engine to said information-dependent grammar by said voice navigation component.

9. Computer program product stored on a computer-readable media containing software for performing each and every step of the method according to any of claims 4 to 8 when said program is executed on a computer.

## Patentansprüche

1. Navigationssystem für ein Clientsystem zur Erfassung von
durch Webanwendungen bereitgestellten Informationen,
wobei das Clientsystem umfasst:
eine auf dem Clientsystem (60) installierte Spracherkennungsmaschine (10),
einen auf dem Clientsystem installierten Browser (12) zur Herstellung der Kommunikation mit einer Kommunikationskomponente auf einem Serversystem (70), der den Zugriff auf auf diesem Server gespeicherte Informationen (6) bereitstellt,
eine Sprachnavigationskomponente (2), die so konfiguriert ist, dass sie der Spracherkennungsmaschine (10) über den Browser informationsabhängige Grammatiken basierend auf von dem Serversystem geladenen Ausgangsinformationen bereitstellt, und die die Ergebnisse des Spracherkennungssystems (10) verarbeitet,
eine Zeigen-und-Klicken-Navigationskomponente zum Laden von Webseiten durch Zeigen auf und Anklicken von in HTML-Dokumenten angezeigten Hyperlinks,
**dadurch gekennzeichnet, dass**
die Sprachnavigationskomponente und die Zeigen-und-Klicken-Komponente eine gemeinsame Benutzerschnittstelle mit durch einen Benutzer auswählbaren Optionen haben, wobei die Benutzerschnittstelle für die Sprachnavigationskomponente Optionen zur Auswahl von auf dem Server gespeicherten, informationsabhängigen Grammatiken bietet.

2. Navigationssystem gemäß Anspruch 1, bei dem die Sprachnavigation und die Zeigen-und-Klicken-Komponente gemeinsam mit einer Ausgangs-Webseite vom Server geladen werden.

3. Navigationssystem gemäß Anspruch 1, bei dem die Spracherkennungsmaschine (10) ferner eine Sprachsynthesemaschine umfasst.

4. Verfahren zur Navigation durch ein Clientsystem zur Erfassung von durch Webanwendungen bereitgestellten Informationen, wobei das Verfahren die folgenden Schritte umfasst:
Installieren einer Spracherkennungsmaschine (10) auf dem Client-System (60),
Herstellen der Kommunikation mit einer Kommunikationskomponente auf einem Serversystem (70), das so konfiguriert ist, dass es mit einem Browser auf auf diesem Server gespeicherte Informationen (6) zugreift,
Bereitstellen einer Sprachnavigationskomponente (2), die so konfiguriert ist, dass sie der Spracherkennungsmaschine (10) über den Browser informationsabhängige Grammatiken basierend auf von dem Serversystem geladenen Ausgangsinformationen bereitstellt, und die die Ergebnisse des Spracherkennungssystems (10) verarbeitet,
Bereitstellen einer Zeigen-und-Klicken-Navigationskomponente für das Laden von Webseiten durch Zeigen auf und Anklicken von in HTML-Dokumenten angezeigten Hyperlinks,
**gekennzeichnet durch** die Schritte des
Bereitstellens einer gemeinsamen Benutzerschnittstelle für die Sprachnavigations- und die Zeigen-und-Klicken-Komponente,
Bietens von Optionen zur Auswahl von auf dem Server gespeicherten, informationsabhängigen Grammatiken in der Schnittstelle für die Navigationskomponente.

5. Verfahren gemäß Anspruch 4, bei dem die Sprachnavigation und die Zeigen-und-Klicken-Komponente gemeinsam mit einer Ausgangs-Webseite von dem Server geladen werden.

6. Verfahren gemäß Anspruch 4, bei dem die informationsabhängige Grammatik mögliche Eingabewerte zur Navigation innerhalb von verwandten Webseiten oder zu einer Webanwendung gehörenden Webseiten oder verwandten Webanwendungen festlegt.

7. Verfahren gemäß Anspruch 5, bei dem die Ausgangs-Webseite einen Verweis auf die Sprachnavigationskomponente und die Zeigen-und-Klicken-Komponente, die auf dem Server gespeichert sind, umfasst.

8. Verfahren gemäß Anspruch 5, bei dem das Laden der Ausgangs-Webseite von den folgenden weiteren Schritten begleitet ist:
automatisches Identifizieren von Verweisinformationen auf informationsabhängige Grammatiken in der Ausgangs-Webseite,
automatisches Laden der identifizierten informationsabhängigen Grammatik auf den Client, und
Bereitstellen von Zugriff auf die informationsabhängige Grammatik für die Spracherkennungsmaschine durch die Sprachnavigationskomponente.

9. Rechnerprogramm, das auf einem rechnerlesbaren Medium gespeichert ist und das Software zur Durchführung jedes einzelnen Schritts des Verfahrens gemäß einem der Ansprüche 4 bis 8, wenn das Programm auf einem Rechner ausgeführt wird, umfasst.

## Revendications

1. Un système de navigation pour un système client, pour collecter de l'information fournie par des applications web, dans lequel ledit système client comprend :
un moteur de reconnaissance vocale (10), installé sur ledit système client (60),
un navigateur (12), installé sur ledit système client pour établir une communication avec un composant de communication sur un système serveur (70), fournissant un accès à de l'information (6) stockée sur ledit serveur,
un composant de navigation vocal (2) configuré pour fournir des grammaires, dépendantes de l'information, audit moteur de reconnaissance vocale (10) via ledit navigateur, d'après une information initiale chargée depuis ledit serveur, audit client, et traiter des résultats dudit système de reconnaissance vocale (10),
un composant de navigation à pointer-et-cliquer pour charger des pages web en pointant et en cliquant sur des hyperliens affichés dans des documents HTML,
**caractérisé en ce que**
ledit composant de navigation vocale et ledit composant à pointer-et-cliquer comprennent une interface-utilisateur commune, avec des options pouvant être sélectionnées par un utilisateur, dans lequel ladite interface utilisateur pour le composant de navigation vocale offre des options pour sélectionner des grammaires dépendant de l'information, stockées sur ledit serveur.

2. Le système de navigation selon la revendication 1, dans lequel ledit composant de navigation vocale et ledit composant à pointer-et-cliquer sont chargés avec une page web initiale, depuis ledit serveur.

3. Le système de navigation selon la revendication 1, dans lequel ledit moteur de reconnaissance vocale (10) comprend en outre un moteur de synthèse vocale.

4. Procédé de navigation par un système client, pour collecter de l'information fournie par des applications web, dans lequel ledit procédé comprend les étapes consistant à :
installer un moteur de reconnaissance vocale (10) sur ledit système client (60),
établir une communication avec un composant de communication sur un système serveur (70), configuré pour accéder à de l'information (6) stockée sur ledit serveur par un navigateur,
fournir un composant de navigation vocale (2) configuré pour fournir des grammaires, dépendantes de l'information, audit moteur de reconnaissance vocale (10) via ledit navigateur, d'après de l'information initiale chargée dudit serveur audit client et traitement des résultats dudit système de reconnaissance vocale (10),
fourniture d'un composant de navigation à pointer-et-cliquer, pour charger des pages web en pointant et en cliquant sur des hyperliens affichés dans des documents HTML,
**caractérisé par** les étapes consistant à
fournir une interface-utilisateur commune pour ledit composant de navigation vocale et à pointer et à cliquer,
offrir dans ladite interface, pour ledit composant de navigation, des options pour sélectionner des grammaires, dépendantes de l'information, stockées sur ledit serveur.

5. Procédé selon la revendication 4, dans lequel lesdits composants de navigation vocale et à pointer-et-cliquer sont chargés avec une page web initiale, depuis ledit serveur.

6. Procédé selon la revendication 4, dans lequel ladite grammaire dépendant de l'information définit des valeurs d'entrée possibles pour naviguer dans des pages web afférentes ou des pages web appartenant à une application web, ou dans des applications liées à une page web.

7. Procédé selon la revendication 5, dans lequel ladite page web initiale contient une référence audit composant de navigation vocale et audit composant à pointer-et-cliquer, stockés sur ledit serveur.

8. Procédé selon la revendication 5, dans lequel le chargement de ladite page web initiale est accompagné par les étapes supplémentaires, consistant à :
identifier automatiquement une information de référence à des grammaires dépendantes de l'information, dans ladite page web initiale,
charger automatiquement ladite grammaire dépendant de l'information identifiée audit client, et
fournir l'accès dudit moteur de reconnaissance vocale à ladite grammaire dépendant de l'information, par ledit composant de navigation vocale.

9. Produit de programme pour ordinateur, stocké sur un support lisible par ordinateur, contenant un logiciel pour exécuter chaque étape du procédé selon l'une quelconque des revendications 4 à 8, lorsque ledit programme est exécuté sur un ordinateur.
